(19) Europäisches Patentamt
European Patent Office
Office européen des brevets

(11) Veröffentlichungsnummer: **0 581 058 A1**

# (12) EUROPÄISCHE PATENTANMELDUNG

(21) Anmeldenummer: **93110707.2**

(22) Anmeldetag: **05.07.93**

(51) Int. Cl.5: **C08G 65/40**, C08J 5/18, //C08L71/00

(30) Priorität: **08.07.92 DE 4222388**

(43) Veröffentlichungstag der Anmeldung: **02.02.94 Patentblatt 94/05**

(84) Benannte Vertragsstaaten: **BE DE ES FR GB IT NL**

(71) Anmelder: **HOECHST AKTIENGESELLSCHAFT**
**D-65926 Frankfurt(DE)**

(72) Erfinder: **Wilharm, Peter, Dr,**
**Hans-Fischer-Strasse 4**
**D-86368 Gersthofen(DE)**
Erfinder: **Weller, Thomas, Dr.**
**Am Jungstück 42**
**D-55130 Mainz(DE)**
Erfinder: **Herrmann-Schönherr, Otto, Dr.**
**Grafenstrasse 15**
**D-64625 Bensheim(DE)**

## (54) Folien aus Polyarylenethern.

(57) Folie aus Polyarylenether mit A) 1 bis 100 Mol.-%.Anteil an wiederkehrenden Einheiten der Formel (I)

-[-O-Tr-O-E'-]- (I)

und B) 0 bis 99 Mol.-% Anteil an wiederkehrenden Einheiten der Formel (Ia)

-[-O-E-O-E'-]- (Ia)

worin
E den Rest eines zweiwertigen Phenols, sowie
E' den Rest einer zweiwertigen aromatischen Dihalogenverbindung darstellt
Tr der Rest eines zweiwertigen Phenols der Formel (II) oder (IIa) ist

EP 0 581 058 A1

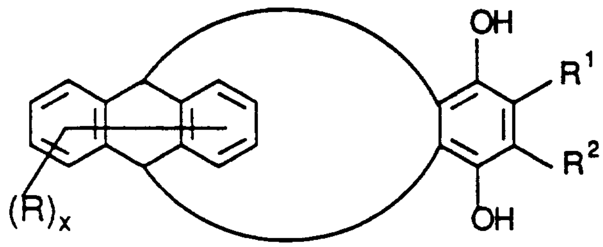

(II)

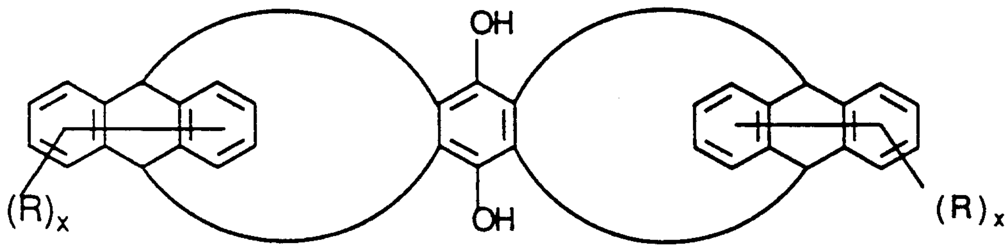

(IIa)

worin

R, $R^1$, $R^2$ gleich oder verschieden sind und Wasserstoff, Alkyl-, Alkoxy-, Aryl-, Aryloxy-Gruppen oder benzannelierte Reste bedeuten, und

x Null oder eine ganze Zahl 1, 2, 3 oder 4 ist.

Diese Folien haben eine hohe Glasübergangstemperatur, eine hohe Wärmeformbeständigkeit, gute mechanische Eigenschaften, hohe chemische Beständigkeit und sind für viele Gase durchlässig. Sie können deshalb vorteilhaft als Membrane für die Gaspermeation eingesetzt werden. Dabei ist es möglich, die Folien für sich allein oder im Verbund mit anderen Folien zu verwenden.

Die Erfindung bezieht sich auf Folien aus Polyarylenethern und ihre Verwendung, Vorzugsweise als Membranen für die Gaspermeation.

Es ist bereits bekannt, daß Polysiloxane als Membranmaterialien vielfältige Anwendung finden. Beispielsweise werden diese Membranen im technischen Maßstab aufgrund ihrer hohen Permeabilität zur Gasseparation eingesetzt. Nachteilig ist, daß die Polysiloxane eine sehr niedrige Glasübergangstemperatur besitzen und die daraus gefertigten Folien eine geringe mechanische Festigkeit und geringe Lösemittelbeständigkeit aufweisen.

Es ist weiterhin bekannt, daß Folien aus aromatischen Polyarylenetherketonen als Gasseparationsmaterialien vorgeschlagen worden sind. In der DE-A-38 36 169 werden Folien aus Polyetherketonen auf der Basis von Dihydroxydiphenylcycloalkanen beschrieben. Die dort angeführten Folien zeigen zwar hinsichtlich Glasübergangstemperatur und Gaspermeabilität ein gutes Eigenschaftsniveau, sind aber nur wenig lösemittelbeständig.

Es ist daher erwünscht, Membranmaterialien, insbesondere Folien für die Gasseparation bereitzustellen, die neben einer hohen Selektivität und Permeabilität sehr hohe Glasübergangstemperaturen und gute Lösemittelbeständigkeit aufweisen.

Die Erfindung betrifft somit Folien aus Polyarylenether mit A) 1 bis 100 Mol-%, vorzugsweise 25 bis 100 Mol-% Anteil an wiederkehrenden Einheiten der Formel (I)

-[-O-Tr-O-E'-]- (I)

und B) 0 bis 99 Mol-%, vorzugsweise 0 bis 75 Mol-% Anteil an wiederkehrenden Einheiten der Formel (Ia)

-[-O-E-O-E'-]- (Ia)

wobei die Summe von A) und B) 100 Mol-% beträgt, und worin
E den Rest eines zweiwertigen Phenols, sowie
E' den Rest einer zweiwertigen aromatischen Dihalogenverbindung darstellt, deren Chlor- oder Fluorabgangsgruppen durch ortho- oder para-ständige elektronenabziehende Gruppen aktiviert sind,
Tr ist der Rest eines zweiwertigen Phenols der Formel (II) oder (IIa)

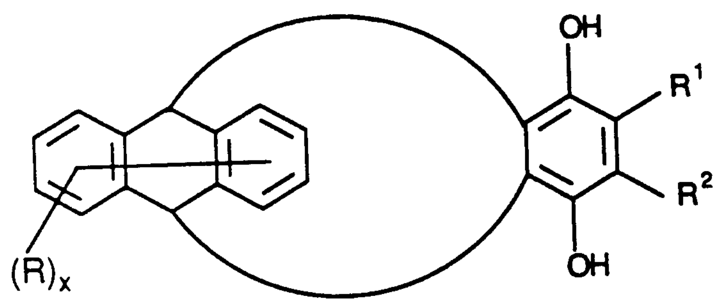

(II)

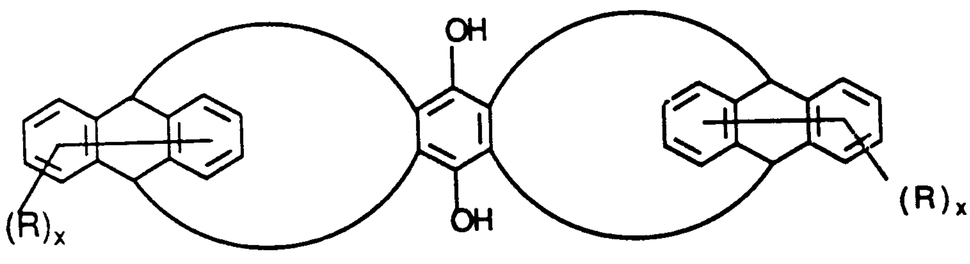

(IIa)

worin
R, $R^1$, $R^2$ gleich oder verschieden sind und Wasserstoff, Alkyl-, Alkoxy-, Aryl-, Aryloxy-Gruppen oder benzanellierte Reste, vorzugsweise Methyl-, Phenyl-, Methoxy- oder Phenoxy-Gruppen bedeuten, und
x Null oder eine ganze Zahl 1,2,3 oder 4 ist.

Verbindungen gemäß Formel (II), nachfolgend "Triptycen-Bisphenole" genannt, können beispielsweise durch Cycloaddition (Diels-Alder-Reaktion) von Anthracen oder Anthracen-Derivaten mit Benzochinon oder Benzochinon-Derivaten und nachfolgender säure- oder basenkatalysierter Isomerisierung hergestellt werden.

Neben Anthracen sind folgende mehrkernige aromatische Verbindungen zur Herstellung der Triptycen-Bisphenole geeignet:
1-, 2- und 9-Methyl-anthracen, 9-Chlor-, 9-Brom-, 9-Benzoyl-, 9-Nitro-, 9-Phenyl-, 9-Methoxy- und 9-Benzyloxy-anthracen, die verschiedenen Dimethylanthracene wie 1,2-, 1,3-, 1,4-, 1,5-, 1,8-, 2,3-, 2,6-, 2,7-, 2,9-, 3,9- und 9,10-Dimethyl-anthracen, ferner 9,10-Dichlor-, 9,10-Dibrom-, 9,10-Dibenzoyl-, 9,10-Dinitro-, 9,10-Diphenyl-, 1,5-Dimethoxy-, 1,5-Diphenoxy-, 1,5-Benzyloxy- und 2,9,10-Trichlor-anthracen, 1,2,4-, 1,3,6-, 1,3,10-, 1,4,6-, 2,3,6-, 2,3,9-, 1,2,4-, 1,9,10- und 2,9,20-Trimethyl-anthracen, 1,2,3,4-, 1,2,5,6-, 1,2,7,8-, 1,2,9,10-, 1,3,5,7-, 1,3,6,8-, 2,3,6,7- und 1,2,3,4-Tetramethyl-anthracen, 1,2-Benz-anthracen, 1,2,3,4-Dibenz-anthracen, 1,2,5,6-Dibenz-anthracen, 3-Methyl-cholanthren, Tetracen, Pentacen, Rubren und Perylen.

Neben Benzochinon sind folgende chinoiden Verbindungen zur Herstellung der Triptycen-Bisphenole geeignet:
Methyl-, Phenyl-, Methoxy-, Phenoxy-, Chlor-benzochinon, 2,3-Dimethyl-, 2,3-Diphenyl-benzochinon und Naphthochinon.

Die Bedingungen zur Herstellung der Bisphenole sind in W. Theilacker et al., "Synthese des Triptycens und seiner 9- und 9.10 Derivate", Chem. Ber. 93, 1658 (1960) und in L.W. Butz, A.W. Rytina "The Diels-Alder Reaction: Quinones and other Cyclenones", Org. Reactions 5, 136 beschrieben.

Verbindungen gemäß Formel (IIa), nachfolgend Bistriptycen-Bisphenole genannt, können aus Benzochinon und Anthracen oder Anthracen-Derivaten durch folgende Reaktionssequenz hergestellt werden:

Herstellung Bistriptycen-Bisphenole:

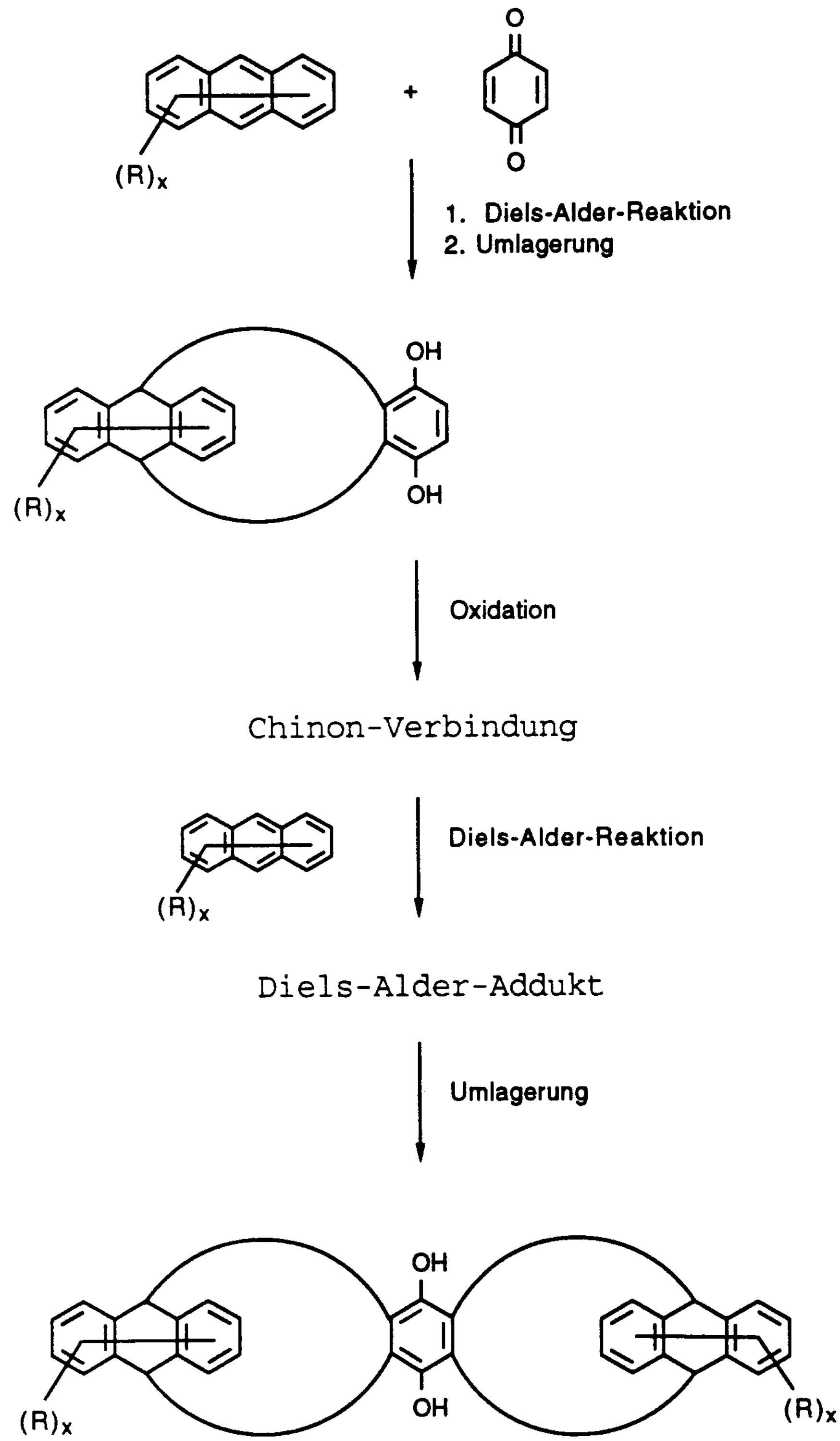


Dabei wird zuerst aus Benzochinon und Anthracen oder einem Anthracen-Derivat das Diels-Alder-Addukt hergestellt, dieses dann säurekatalysiert zum Triptycen-Bisphenol umgelagert. Das Triptycen-Bisphenol wird dann beispielsweise durch Natrium- oder Kaliumbromat, wie in P.D. Bartlett, J. Amer. Chem. Soc. 76, 1088 (1954) beschrieben zum entsprechenden Chinon oxidiert.

Anschließend wird dieses Zwischenprodukt erneut mit Anthracen oder einem Anthracen-Derivat zum Diels-Alder-Addukt umgesetzt, das dann säurekatalysiert zum Bistriptycen-Bisphenol umlagert.

Triptycen-Bisphenole gemäß Formel (II) oder Bistriptycen-Bisphenole (IIa) können weiterhin auf bekannte Weise chemisch modifiziert werden, z.B. durch Nitrierung, Sulfonierung oder Einführung polarer Seitengruppen.

Beispielsweise wird eine Herstellung von Triptycen-Bisphenolen gemäß Formel (II) angegeben, bei denen $R^1$ einer Triphenylphosphonium-Gruppe oder einer Pyridinium-Gruppe entspricht und $R^2$ jeweils Wasserstoff darstellt (US 3 065 075).

Verbindungen gemäß Formel (IIa) lassen sich beispielsweise aus Triptycen-Bisphenolen der Formel (II), bei denen $R^1$ und $R^2$ jeweils Wasserstoff darstellt, gewinnen. So wird die Herstellung von Bis-Triptycen-Bisphenol gemäß Formel (IIa) beschrieben, bei dem R Wasserstoff ist (E. Clar, Chem. Ber. 64, 1676 (1931)-).

Bevorzugt werden bei der Herstellung der Polyarylenether-Folien gemäß der Erfindung -Verbindungen gemäß Formel (II) und (IIa) eingesetzt, bei denen R, $R^1$ und $R^2$ jeweils Wasserstoff darstellt.

Geeignete Bisphenole E zur Herstellung der Polymere der Formel (Ia) sind beispielsweise Hydrochinon, Resorcin, Dihydroxybiphenyle, Bis-(hydroxyphenyl)-alkane, Bis-(hydroxyphenyl)-cycloalkane wie sie in DE-OS 38 36 169 beschrieben sind, Bis-(hydroxyphenyl)-ether, Bis-(hydroxyphenyl)-ketone, Bis-(hydroxyphenyl)-sulfone, Bis-(hydroxyphenyl)-sulfoxide, Bisphenole mit Spiroindan-Struktur, wie in EP -A-O 287 887 beschrieben und Cardo-Bisphenole, wie sie beispielsweise in Polymer 29, 358 (1988), Macromolecules 3, 536 (1970) und in DE-OS 37 25 058 beschrieben sind.

Bevorzugte Bisphenole E sind:

4,4'-Dihydroxydiphenyl, 3,3',5,5'-Tetramethyl-4,4'-dihydroxydiphenyl, 4,4'-Dihydroxydiphenylsulfon (Bisphenol S), Tetramethylbisphenol S, Bis-(4'-hydroxyphenyl)methan, 2,2-Bis(4'-hydroxyphenyl)ethan, 2,2-Bis(4'-hydroxyphenyl)propan (Bisphenol A), Tetramethylbisphenol A, 2,2-Bis(4'-hydroxyphenyl)methan, 1,1-Bis(4'-hydroxyphenyl)-3,3,5-trimethyl-cyclohexan, 4,4'-Dihydroxybenzophenon, 1,4-Bis(4'-hydroxybenzoyl)benzol, 9,9-Bis(4'-hydroxyphenyl)fluoren, 3-(3,5-Dimethyl-4-hydroxyphenyl)indan-5-ol, 6,6'-Dihydroxy-3,3,3'-tetramethyl-1,1'-spiro(bisindan) oder Mischungen daraus, insbesondere aber Hydrochinon, Resorcin, Bisphenol A, Tetramethylbisphenol A, Bisphenol S und 1,1-Bis(4'-hydroxyphenyl)fluoren.

Geeignete Dihalogenverbindungen E' zur Herstellung von Verbindungen der Formel (I) oder (Ia) sind in den Formeln (III) und (IV)

X-Ar-Y-Ar-X (III)

X-Ar-Y-Ar'-Y-Ar-X (IV)

wiedergegeben, worin

X für Halogen, vorzugsweise für Chlor- oder Fluor-Gruppen, und

Y für -CO-, $-SO_2-$ oder $-C(CF_3)_2-$ steht,

Ar gleich oder verschieden ist und ein 1,4- oder 1,2-Phenylen-Rest darstellt und Ar' einen divalenten ein- oder mehrkernigen Rest ist, vorzugsweise

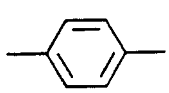

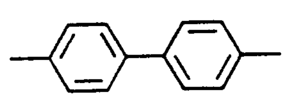

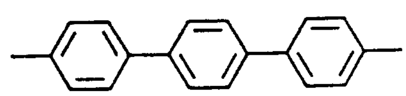

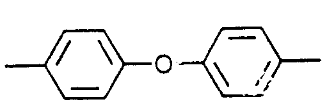

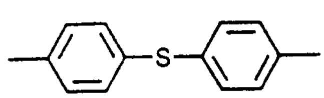

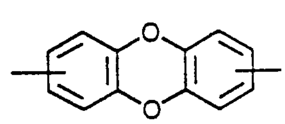

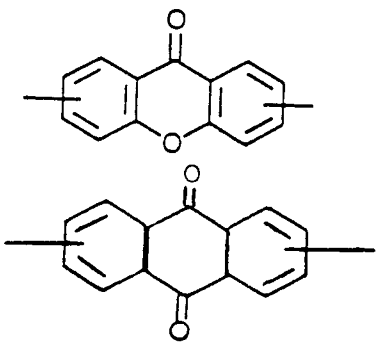

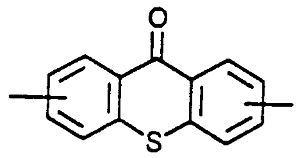

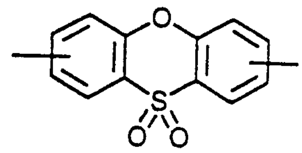

bedeutet.

Bevorzugte Dihalogenverbindungen E' sind: 4,4'-Dichlorbenzophenon, 1,4-Bis-(4'-chlorbenzoyl)benzol, 1-(4'-Chlorbenzoyl)-4-(2'-chlorbenzoyl)benzol, 1,3-Bis-(4'-chlorbenzoyl)benzol, 4,4'-Bis-(4'-chlorbenzoyl)biphenyl, 4,4'-Difluorbenzophenon, 2,4'-Difluorbenzophenon, 1 ,4-Bis-(4'-fluorbenzoyl)benzol, 1-(4'-Fluorbenzoyl)-4-(2'-fluorbenzoyl)benzol, 1,3-Bis-(4'-fluorbenzoyl)benzol, 4,4'-Bis-(4'-fluorbenzoyl)biphenyl, 4,4'-Bis-(4'-fluorbenzoyl)diphenylether, 2,5-Bis-(4'-fluorbenzoyl)naphthalin, 3,6-Difluor-fluorenon, 2,8-Bis(4'-chlorbenzoyl)-diphenylenoxid, 3,6-Difluordibenzophenothiophen-S,S'-dioxid, Bis-(4'-fluorphenyl)phenylphospinoxid, 4,4'-Bis(4'-chlorphenylsulfonyl)-diphenyl, 4,4'-Dichordiphenylsulfon, 4,4'-Difluordiphenylsulfon 1,4-Bis-(4'-chlorbenzolsulfonyl)benzol, 1,3-Bis-(4'-chlorbenzolsulfonyl)benzol, 3,3',5,5'-Tetramethyl-4,4'-dichlordiphenylsulfon, 3-Chlor-4,4'-dichlordiphenylsulfon, 1,3-Dimethyl-4,6-bis(4'-chlorphenylsulfonyl)-benzol und Mischungen daraus, insbesondere 4,4'-Difluorbenzophenon, 1,4-Bis(4'-chlorbenzoyl)benzol, 4,4'-Dichlordiphenylsulfon.

Polyarylenether, die erfindungsgemäß zu Folien verarbeitbar sind, enthalten mindestens 20 Mol-% an wiederkehrenden Struktureinheiten der Formel (V), (VI), (VII), (VIII), (IX), (X) oder eine Kombination daraus

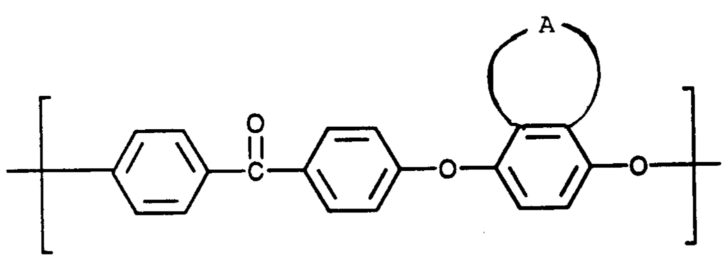

(V)

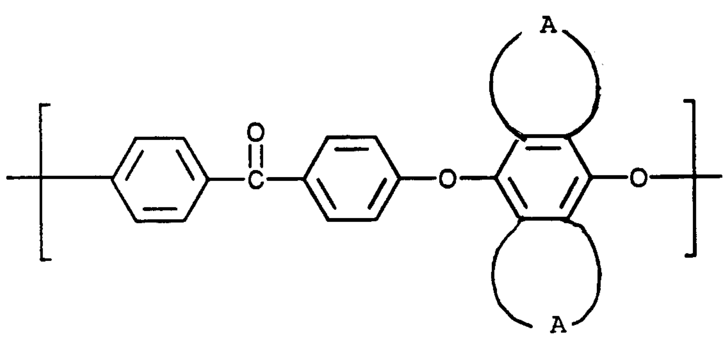

(VI)

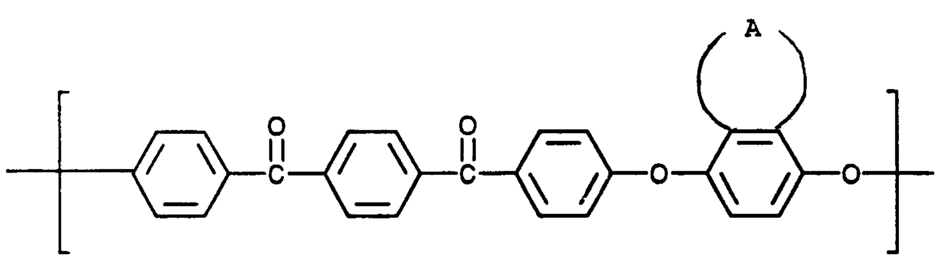

(VII)

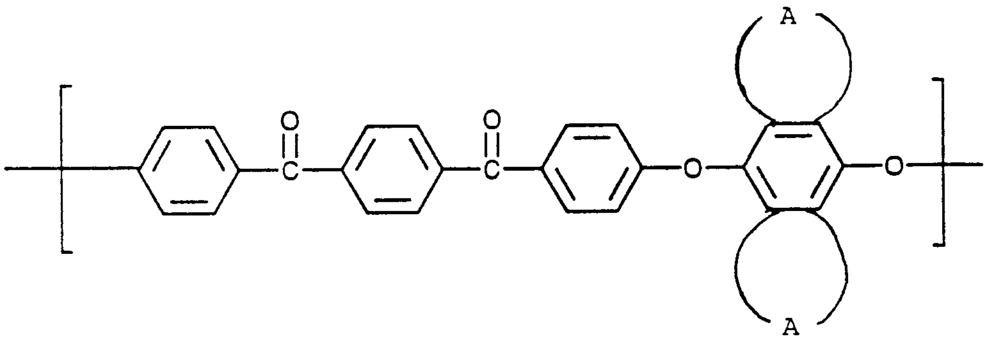

(VIII)

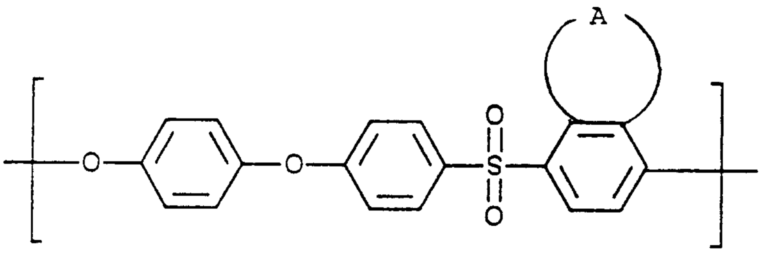

(IX)

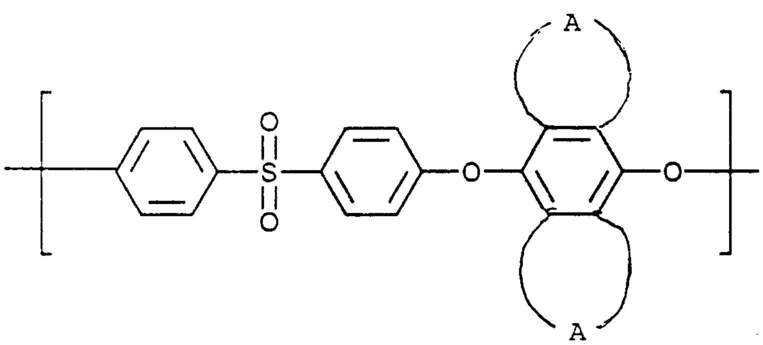

(X)

worin A für einen Rest der Formel

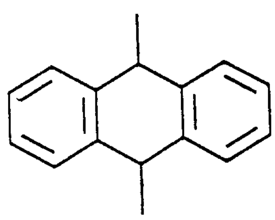

steht.

Sie weisen ein Molgewicht von über 3000 g/mol bis 100 000 (Gewichtsmittel) auf, ihr Kristallinitätsgrad ist < 5 %.

Die erfindungsgemäß zu Folien verarbeitbaren Polyarylenether werden im allgemeinen durch nucleophile Polykondensation hergestellt.

Dabei können die Dialkalisalze der Bisphenole in situ oder durch einen der Polykondensation vorgelagerten Schritt, bevorzugt eine azeotrope Entwässerung, hergestellt werden (Azeotrop-Verfahren).

Die Verfahrensbedingungen zur Herstellung von Polyarylenether durch nucleophile Polykondensation, insbesondere die anwendbaren Lösemittel und Zusätze sind beschrieben. (EP B-0 001 879, EP-B-0 193 187, US-A 4 108 837, US-A 4 175 175, "Comprehensive Polymer Science", Band 5, Seite 483 ff. und Seite 561 ff., Hrsg. G. Allen, Pergamon Press 1989 und Polymer 22, 1096, (1981)).

Die Herstellung der Polymere, die für die Folienherstellung eingesetzt werden, erfolgt in mindestens einem polaren, aprotischen Lösemittel, z.B. in aromatischen oder aliphatischen Sulfoxiden oder Sulfonen, N-alkylierten Lactamen, N-alkylierten Pyrrolidonen, N,N-Dimethylformamid, N,N-Dimethylacetamid, offenkettigen und cyclischen N-alkylierten Harnstoffen wie Dimethylsulfoxid, Dimethylsulfon, 1,1-Dioxothiolan (Sulpholan), N,N-Dimethylformamid, N-Methyl- und N-Ethyl-caprolactam, Tetramethylharnstoff, ferner in aromatischen Sulfonen wie Diphenylsulfon, Ditolylsulfon, Dibenzothiophen-S,S-dioxid, 4-Phenylsulphonyl-biphenyl. Besonders bevorzugt ist Diphenylsulfon.

Die polaren, aprotischen Lösemittel werden in solchen Mengen angewendet, daß die Reaktionslösungen einen Feststoffgehalt von 5 bis 50 Gew.%, vorzugsweise von 15 bis 40 Gew.% Feststoffgehalt aufweisen.

Geeignete Wasser-Azeotropbildner für das Azeotrop-Verfahren sind alle Substanzen, die im Bereich der Reaktionstemperatur bei Normaldruck sieden und sich mit dem Reaktionsgemisch mischen lassen, ohne chemische Reaktionen einzugehen, z.B. Chlorbenzol, Toluol, Xylol, Cyclohexan.

Die Polykondensation wird im allgemeinen in Gegenwart einer anorganischen Base durchgeführt. Geeignete Verbindungen sind Alkali-Hydroxide, -Carbonate, -Hydrogencarbonate, -Fluoride. Bevorzugt sind die Carbonate und Hydrogencarbonate des Natriums und Kaliums und Mischungen daraus, insbesondere Natriumcarbonat, Natriumhydrogencarbonat, Kaliumcarbonat, Kaliumhydrogencarbonat.

Die Gesamtmenge an Base ist im allgemeinen so bemessen, daß pro Mol Hydroxylgruppen wenigstens ein Mol Metallatome, vorzugsweise 1,0 bis 1,2 Mol Metallatome vorhanden sind.

Bei der Verwendung der aromatischen Sulfone als Lösungsmittel werden die Basen in gemahlener und getrockneter Form eingesetzt, wobei die Korngröße kleiner als 0,4 mm, vorzugsweise 1 bis 350 $\mu$m betragen soll.

Die angewendete Reaktionstemperatur hängt u.a. von der Reaktivität der Monomere und vom Lösemittel ab und liegt im allgemeinen im Bereich von 150 bis 400 °C, vorzugsweise 170 bis 280 °C. Die anwendbaren Druckverhältnisse betragen 0,8 bar (80 kPa) bis 10 bar (1000 kPa), bevorzugt 1 bis 3 bar, insbesondere aber atmosphärischer Umgebungsdruck.

Das Molekulargewicht der nach dem erfindungsgemäßen Verfahren hergestellten Polymere kann dadurch eingestellt werden, daß man eines der Monomere mit einem leichten Über- oder Unterschuß bezüglich der stöchiometrisch erforderlichen Menge einsetzt. Bevorzugt werden die Bisphenole und die Dihalogenverbindungen im Molverhältnis 1,1:1 bis zu 1:1,1 eingesetzt. Besonders bevorzugt wird ein geringer Überschuß der Dihalogenverbindungen, der sehr nahe am molaren Verhältnis 1:1 liegt, eingesetzt.

Eine weitere Möglichkeit zur Einstellung des gewünschten Molekulargewichts besteht in der Zugabe einer kettenabbrechenden Verbindung (Regler) bei der Polykondensation. Als solche kommen beispielsweise Methylchlorid, 4-Chlordiphenylsulfon, 4-Fluorbenzophenon in Frage.

Wenn bei der Polykondensation das gewünschte Molekulargewicht erreicht worden ist, kann abschließend zur Stabilisierung von eventuell vorhandenen freien Phenolat-Endgruppen ein Arylierungs- oder Alkylierungsmittel angewendet werden. Als solche kommen beispielsweise in Frage 4,4'-Difluorbenzophenon, 1,4-Bis(4-fluorbenzoyl)benzol, Methylchlorid, 4-Chlordiphenylsulfon oder 4-Fluorbenzophenon.

Bei Verwendung von Diphenylsulfon als Lösemittel zur Polykondensation erfolgt die Aufarbeitung der Reaktionslösung nach den üblichen, an sich bekannten Verfahren. Bevorzugt wird aus der Schmelze ein feinteiliges Gut erzeugt, welches durch Extraktion mit geeigneten Lösemitteln (z.B. Aceton) vom Diphenylsulfon befreit wird. Ebenso kann zur Extraktion eine abgeschreckte Reaktionslösung benutzt werden, die vor der Extraktion fein gemahlen wird. Anschließend können Reste anorganischer Salze durch Extraktion mit Wasser und gegebenenfalls verdünnter Säure entfernt werden.

Bei der Verwendung von aliphatischen Lösemitteln zur Polykondensation wie beispielsweise N-Methylcaprolactam, N,N-Dimethylformamid, Dimethylsulfoxid, N,N-Dimethylacetamid, Sulfolan, Dimethylsulfon, Tetramethylharnstoff filtriert man zuerst die als Nebenprodukte ausgefallenen Salze ab. Gegebenenfalls, insbesondere wenn sehr viskose Lösungen vorliegen, wird dazu das Reaktionsgemisch mit dem Reaktionslösemittel oder einem anderen Lösemittel für den Polyarylenether verdünnt.

Das Polymer wird anschließend durch Eingießen des Filtrats in ein geeignetes Fällungsmedium, z.B. Wasser, Alkohole oder Mischungen ausgefällt, nach gegebenenfalls weiteren Waschschritten erfolgt die Trocknung.

Die Polyarylenether gemäß der Erfindung sind thermoplastische Werkstoffe mit hoher Glasübergangstemperatur, sehr guter chemischer Beständigkeit, guten mechanischen Eigenschaften und günstigem Brandverhalten.

Sie können durch Extrusion, Spritzgießen, Sintern oder Verpressen in üblicher Weise verarbeitet werden.

Aus den Polyarylenethern können Folien nach den bekannten Verfahren hergestellt werden, z.B. durch Extrusion einer Polymerschmelze durch eine Breitschlitzdüse, durch Blasen auf einer Folienblasmaschine, Tiefziehen, Gießen oder Heißverpressen.

Die so hergestellten Folien weisen eine Dicke von 1 bis 1500 µm, bevorzugt von 10 bis 700 µm auf.

Die Folien können anschließend auf an sich bekannte Weise bei Temperaturen zwischen Raumtemperatur und Erweichungspunkt der Folien monoaxial oder biaxial orientiert werden, bevorzugt im Verhältnis 1:1,5 bis 1:3.

Diese Folien haben eine hohe Glasübergangstemperatur, eine hohe Wärmeformbeständigkeit, gute mechanische Eigenschaften, hohe chemische Beständigkeit und sind für viele Gase durchlässig. Sie können deshalb vorteilhaft als Membrane für die Gaspermeation eingesetzt werden.

Dabei ist es möglich, die Folien für sich allein oder im Verbund mit anderen Folien zu verwenden.

Im folgenden sind Materialien genannt, die zusammen mit Folien aus den aufgeführten Polyarylenethern Verbundfolien ergeben. Diese Materialien liegen ebenfalls in Folienform vor und werden als Komponenten (b) bezeichnet und sind

(b1) amorphe Thermoplaste, vorzugsweise mit einer Glasübergangstemperatur von mehr als 40 °C, insbesondere von 60 bis 220 °C, als auch

(b2) teilkristalline Thermoplaste, vorzugsweise solche mit einer Schmelztemperatur von mehr als 60 °C, insbesondere von 80 bis 400 °C.

(b3) Elastomere, die eine Glasübergangstemperatur von unter 0 °C, vorzugsweise von unter -10 °C und insbesondere von -15 bis -140 °C, haben.

Detaillierte Angaben zur Herstellung und die Eigenschaften der angeführten Polymerklassen finden sich in DE-A 38 36 169.

Weiterhin können die Folien neben der Anwendung zur Gaspermeation als Auskleidung von Flüssigkeitsbehältern und als Zwischenschichten in photographischen Filmen und Papieren dienen.

Die für den Einsatz in Folien hergestellten Polyarylenether-Polymere besitzen eine inhärente Viskosität von wenigstens 0,2 dl/g, bevorzugt von 0,2 bis 2,5 dl/g, insbesondere von 0,4 bis 1,8 dl/g.

Alle in den folgenden Beispielen genannten inhärenten Viskositäten sind Mittelwerte und wurden nach der Methode von Sorenson et al., die in "Preparative Methods of Polymer Chemistry", Interscience (1968), Seite 49 beschrieben wird, ermittelt.

Die in den Beispielen genannten Teile und Prozente beziehen sich auf das Gewicht, Dihydroxytriptycen steht für

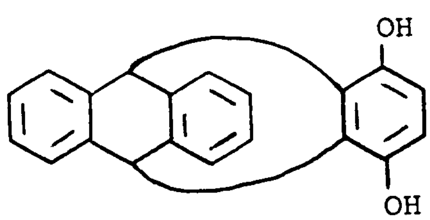

, Dihydroxy-bistriptycen steht für

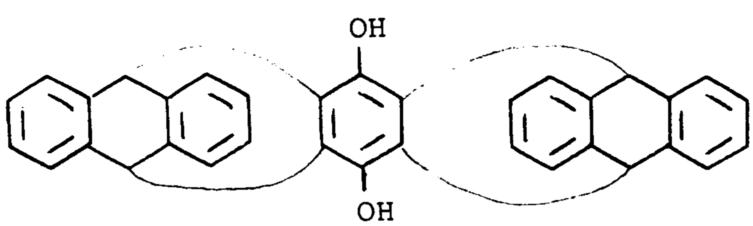

Beispiele

Herstellung von Dihydroxy-bistriptycen

Die Herstellung des als Ausgangsmaterial verwendeten Triptycen-chinon wird in US-A 3,242,186, Beispiel 4 beschrieben.

142 g Triptycen-chinon, 89 g Anthracen und 500 ml Xylol wurden zusammen unter Rühren 5 Stunden am Rückfluß erhitzt, nach dem Abkühlen abgesaugt, zweimal mit 100 ml Aceton nachgewaschen und über Nacht unter vermindertem Druck bei 50 °C getrocknet.

Das so erhaltene Zwischenprodukt wurde in 700 ml Essigsäure unter Rühren zum Sieden erhitzt, 10 ml 30%ige HBr zugegeben und 30 Minuten nachgerührt. Nach dem Abkühlen wurde abgesaugt, mit 100 ml Essigsäure und zweimal mit 200 ml Aceton nachgewaschen und bei 50 °C unter vermindertem Druck getrocknet. Ausbeute: 170 g, Schmelzpunkt >300 °C.

Eine weitere Reinigung kann, wenn erforderlich, durch Umkristallisation oder durch Acetylierung und nachfolgender Abspaltung der Acetylgruppe erfolgen:
Eine Mischung aus 160 g Dihydroxy-bistriptycen, 2 g N,N'-Dimethylaminopyridin und 1000 ml Acetanhydrid wurde 1 Stunde zum Sieden erhitzt. Nach dem Abkühlen wurde die ausgefallene Kristallmasse abgesaugt, zweimal mit 100 ml Aceton nachgewaschen und bei 80 °C unter vermindertem Druck getrocknet.
Ausbeute: 175 g farblose Kristalle, Schmelzpunkt >350 °C.

Das 'H-NMR Spektrum (Meßfrequenz 100 MHz, [$D_6$]-Dimethylsulfoxid als Lösemittel, Tetramethylsilan als interner Standard) zeigt folgende Signale: 7,13 (dq, Aromat, 16H), 5,58 (s, H-Brückenkopf, 4H), 3,33 (s, -$COCH_3$, 4H) ppm.

Das acetylierte Zwischenprodukt wurde anschließend in einer Mischung aus 500 ml Ethanol und 100 ml 20 %iger Salzsäure 3 Stunden zum Sieden erhitzt, der Ansatz abgekühlt, die ausgefallene Kristallmasse abgesaugt, zweimal mit 100 ml Ethanol nachgewaschen und bei 80 °C unter vermindertem Druck getrocknet.
Das so erhaltene gereinigte Dihydroxy-bistriptycen zeigt im Dünnschichtchromatogramm (Hexan/Essigester 5:2, Merck DC-Aluminium-Folien Kieselgel 60 F 254) einen $R_F$-Wert von 0,22.

1.) Die Polykondensation wurde in folgender Apparatur durchgeführt:
2-l-Doppelmantel-Rührkessel aus V4A-Stahl (Beheizung mit Wärmeträgeröl), ausgestattet mit Bodenablaßventil, Einlaß für Stickstoff-Schutzgas, Rührer aus V4A-Stahl, Thermofühler für Innentemperaturmessung, Abgasrohr mit Tauchung in Wasser (Blasenzähler).
Die Messung der Viskosität der Reaktionslösung erfolgte durch Messung des Drehmoments an der Rührwelle.
Man leitete während des gesamten Reaktionsverlaufs einen stetigen Stickstoff-Gasstrom über die Reaktionsmischung, um das bei der Reaktion entstandene Wasser zu entfernen.

In den Rührkessel wurden eingewogen:
322 g 1,4-Bis(4'-fluorbenzoyl)benzol, 281 g Dihydroxytriptycen, 127 g Natriumcarbonat (getrocknet und gemahlen) und 1200 g Diphenylsulfon.
Der Kesselinhalt wurde zuerst auf 200 °C erhitzt. Nach 30 Minuten bei 200 °C wurde die Temperatur im Verlauf von 4 Stunden auf 280 °C gesteigert. Bei 280 °C wurde portionsweise kleine Mengen Dihydroxytriptycen zugegeben, bis die Reaktionslösung die gewünschte Viskosität erreicht hatte. Anschließend wurden 8 g 1,4-Bis(4'-fluorbenzoyl)benzol als Kettenabbrecher zugegeben und die Lösung noch 30 Minuten nachgerührt.
Die viskose Reaktionslösung wurde auf einem Blech ausgegossen, die nach dem Erkalten erhaltene dünne Platte fein gemahlen und daraus das Polymer wie folgt isoliert:
200 g Reaktionsmischung wurden jeweils für 1 Stunde extrahiert: einmal mit 1,5 l Aceton bei 25 °C, zweimal mit 1,5 l Aceton bei Rückflußtemperatur, dreimal mit 1,5 l Wasser bei 80 °C, einmal mit 1,5 l Aceton bei Rückflußtemperatur. Anschließend wurde bei 120 °C unter vermindertem Druck bis zur Gewichtskonstanz getrocknet. Das Polymer zeigte bei DSC-Messungen eine Glasübergangstemperatur von 244 °C, die inhärente Viskosität betrug 1,1 dl/g.

2) In einem 500-ml-Dreihalskolben, ausgestattet mit mechanischem Rührer, Einlaß für Stickstoff-Schutzgas und einem Aufsatz zur azetropen Wasserentfernung, wurden eingewogen: 43 g Dihydroxytriptycen, 19 g Kaliumcarbonat und 200 ml Toluol.
Die Suspension wurde mit Argon-Schutzgas überlagert und zum Sieden erhitzt. Anschließend ließ man langsam 200 ml Sulfolan zutropfen und erhöhte dabei die Innentempertaur langsam auf 160 °C. Das entstehende Wasser-Toluol-Azeotrop destillierte dabei ab. Nach vollständiger Entfernung des Reaktionswassers und des Toluols wurde eine Mischung aus 43,7 g 4,4'-Dichlordiphenylsulfon und 50 ml Sulfolan zugegeben. Anschließend wurde der Ansatz wie folgt behandelt:
1 Stunde bei 200 °C, 1 Stunde bei 240 °C, 1 Stunde bei 260 °C. Zur viskosen Reaktionslösung wurden dann 2 g 1,4-Bis(4'-fluorbenzoyl)benzol als Kettenabbrecher zugegeben und die Lösung noch 30 Minuten nachgerührt. Die Aufarbeitung des Polymers erfolgte durch Fällung in 1000 ml Methanol. Das ausgefallene feine Polymer-Pulver wurde abfiltriert und nacheinander mit je 1000 ml Wasser, Wasser/Aceton (1:1) und Aceton in der Hitze gewaschen, abgesaugt und unter vermindertem Druck bei 120 °C getrocknet.
Das Polymer zeigte bei DSC-Messungen eine Glasübergangstemperatur von 265 °C.

3) Der Versuch gemäß Beispiel 1 wurde mit folgender Rezeptur wiederholt:
258 g 1,4-Bis(4'-fluorbenzoyl)benzol, 92,5 g Dihydroxy-bistriptycen,
66 g Hydrochinon, 1200 g Diphenylsulfon als Lösemittel,
110 g Natriumcarbonat als Base.
Das erhaltene Polymer zeigte bei DSC-Messungen eine Glasübergangs-temperatur von 213 °C.

4) Der Versuch gemäß Beispiel 1 wurde mit folgender Rezeptur wiederholt:
161 g 1,4-Bis(4'-fluorbenzoyl)benzol, 231 g Dihydroxy-bistriptycen, 1200 g Diphenylsulfon als Lösemittel, 33 g Natriumcarbonat als Base.
Das erhaltene Polymer zeigte bei DSC-Messungen eine Glasübergangstemperatur von 304 °C.
5) - 9) Die erhaltenen Polymere wurden heiß unter hohem Druck (300 bar, 350 °C) zu Folien einer Dicke von 500 µm verpreßt.
Alle so hergestellten Folien zeigten gute Aceton-Beständigkeit.

Jeweils von einem homogen, runden Folienteil der Gesamtfläche von ca. 4 $cm^2$ wurde nach zweistündiger Lagerung (verminderter Druck bei 100 °C) die Permeabilität für Sauerstoff ($P_o$) und Kohlendioxid ($P_{CO2}$ bei Raumtemperatur gemessen. Als Detektoren wurden Druckmeßkondensatoren verwendet. Die Permeabilität (P) wurde in Einheiten

$$\frac{cm^3 \cdot mm}{m^2 \cdot 24\ h \cdot 10^5\ Pa}$$

gemessen.

| Beispiel | Polymer | $P_o$ | $P_{CO2}$ |
|---|---|---|---|
| 5 | aus Beisp. 1 | 113 | 551 |
| 6 | aus Beisp. 2 | 135 | 640 |
| 7 | aus Beisp. 3 | 132 | 695 |
| 8 | aus Beisp. 4 | 140 | 710 |

## Patentansprüche

**1.** Folie aus Polyarylenether mit A) 1 bis 100 Mol.-% Anteil an wiederkehrenden Einheiten der Formel (I)

-[-O-Tr-O-E'-]- (I)

und B) 0 bis 99 Mol.-% Anteil an wiederkehrenden Einheiten der Formel (Ia)

-[-O-E-O-E'-]- (Ia)

worin
E den Rest eines zweiwertigen Phenols, sowie
E' den Rest einer zweiwertigen aromatischen Dihalogenverbindung darstellt, deren Chlor- oder Fluorabgangsgruppen durch ortho- oder para-ständige elektronenabziehende Gruppen aktiviert sind, Tr ist der Rest eines zweiwertigen Phenols der Formel (II) oder (IIa)

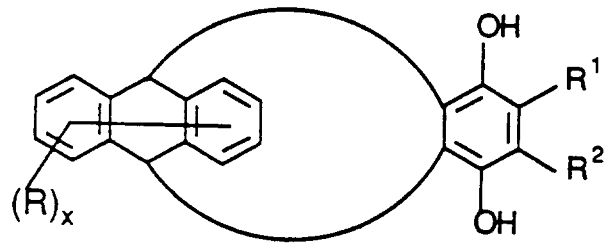

(II)

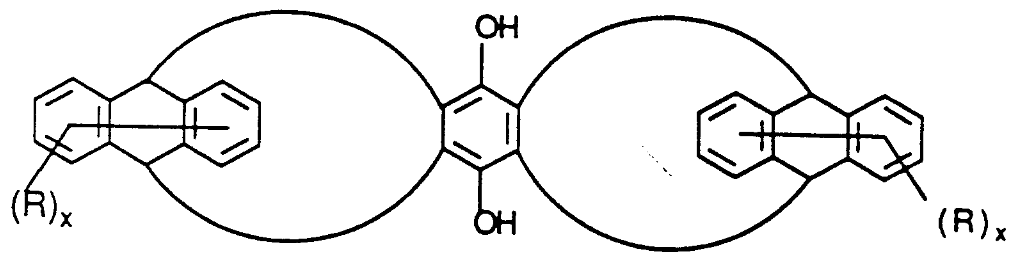

(IIa)

worin
R, $R^1$, $R^2$ gleich oder verschieden sind und Wasserstoff, Alkyl-, Alkoxy-, Aryl-, Aryloxy-Gruppen oder benzanellierte Reste, vorzugsweise Methyl-, Phenyl-, Methoxy- oder Phenoxy-Gruppen bedeuten, und
x Null oder eine ganze Zahl 1,2,3 oder 4 ist.

**2.** Folie nach Anspruch 1, dadurch gekennzeichnet, daß die Komponente A) in einem Anteil von 25 bis 100 Mol.-% und die Komponente B) in einem Anteil bis 25 Mol.-% in Polyarylenether enthalten ist, R, $R^1$ und $R^2$ stellt jeweils eine Methyl-, Phenyl-, Methoxy- oder Phenoxy-Gruppe dar.

**3.** Folie nach Anspruch 1 oder 2, dadurch gekennzeichnet, daß die Polyarylenether eine inhärente Viskosität von wenigstens 0,2 dl/g, vorzugsweise 0,2 bis 2,5 dl/g und insbesondere von 0,4 bis 1,8 dl/g aufweisen.

**4.** Folie nach einem oder mehreren der Ansprüche 1 bis 3, dadurch gekennzeichnet, daß die Folie eine Dicke von 0,1 bis 1000 µm aufweist.

**5.** Verwendung der Folie gemäß einem oder mehreren der Ansprüche 1 bis 4 als Membran für die Gaspermeation.

**6.** Verwendung der Folie gemäß einem oder mehreren der Ansprüche 1 bis 4 zusammen mit einer Folie aus anderen Materialien als Verbundfolie.

Europäisches Patentamt

# EUROPÄISCHER RECHERCHENBERICHT

Nummer der Anmeldung
EP 93 11 0707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | DE-A-41 21 138 (HOECHST AG)<br>* das ganze Dokument * | 1-6 | C08G65/40<br>C08J5/18<br>//C08L71:00 |
| P,A | DE-A-41 21 139 (HOECHST AG)<br>* das ganze Dokument * | 1-6 | |
| A | EP-A-0 364 741 (BAYER AG)<br>* Seite 9, Zeile 29 - Zeile 39; Anspruch 9 * | 6 | |
| D | & DE-A-38 36 169 | | |
| D,A | US-A-3 242 186 (SAMUEL DERSHOWITZ) | | |

RECHERCHIERTE SACHGEBIETE (Int.Cl.5)

C08G
C08J
C08L

Der vorliegende Recherchenbericht wurde für alle Patentansprüche erstellt

| Recherchenort | Abschlußdatum der Recherche | Prüfer |
|---|---|---|
| DEN HAAG | 29. Oktober 1993 | TARRIDA TORRELL, J |

1

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)